# EUROPEAN PATENT APPLICATION

(11) **EP 1 771 026 A1**
(43) Date of publication of application: **04.04.2007**
(21) Application number: 06020058.1
(22) Date of filing: 26.09.2006
(51) Int. Cl.: H04Q 7/38

(54) **Method and system for providing interference avoidance in wireless systems**

(30) Priority: 30.09.2005 US 240545
(71) Applicant: ROBERT BOSCH GMBH, 70442 Stuttgart (DE)
(72) Inventor: Manjeshwar, Arati, AZ 85226 Chandler (US); Venkatraman, Lakshmi, CA 94040 Mountain View (US); Srinivasan, Bhaskar, CA 94025 Menlo Park (US); Pandey, Anshul, CA 94583 San Ramon (US)
(74) Representative: Knapp, Thomas

(57) **Abstract**

A method for providing interference avoidance in a network, the method including sampling each frequency of a communication channel available to the network, collecting samples at a certain location of the network, choosing at least one of a suitable frequency and a unique network identifier based on the collected samples, and distributing the at least one of the suitable frequency and the network identifier to a device of the network.

## Description

### CROSS REFERENCE TO RELATED APPLICATIONS

This application is related to U.S. Patent Applications entitled "Method and System for Time Synchronization in Communication Networks"(Attorney Docket No. 11403/5501), "Method and System for Providing Acknowledged Broadcast and Multicast Communication" (Attorney Docket No. 11403/5502), "Method and System for Providing an Energy Efficient Exchange of Information in Wireless Networks" (Attorney Docket No. 11403/5503), "Method and System for Reliable Data Transmission in Wireless Networks" (Attorney Docket No. 11403/5505), "Method and System to Reduce Delay and/or Energy Consumption in a Multi-Hop Wireless System" (Attorney Docket No. 11403/5506), "Method and System for Providing a Modified Time Division Multiple Access (TDMA) for Reduced Delay" (Attorney Docket No. 11403/5507), "Method and System for Providing Reliable Communication with Redundancy for Energy Constrained Wireless Systems" (Attorney Docket No. 11403/5508), "System and Method for a Communication Protocol for Wireless Sensor Systems Including Systems with High Priority Asynchronous Message and Low Priority Synchronous Message" (Attorney Docket No. 11403/5509), "Method and System to Reconfigure a Network to Improve Network Lifetime Using Most Reliable Communication Links" (Attorney Docket No. 11403/5510). The disclosure of each of the foregoing related applications is hereby incorporated by reference herein in its entirety.

### FIELD OF THE INVENTION

The present invention relates to method of avoiding, or least minimizing, interference between coexisting wireless networks.

### BACKGROUND INFORMATION

As more systems use wireless communication, it may become important to choose communications channels and/or frequencies that are the least congested. In this regard, choosing the least congested communications channel and/or frequency may reduce the delay in information exchange and/or reduce the energy consumption in battery powered devices.

Wireless communication may be flexible, easy to use, and provide reduced installation costs, unobtrusive installation, and expanded capabilities, such as, for example, tracking and wireless interrogation. Advances in low cost and low power RF communication has made this possible, as certain envisioned systems are battery operated and expected to be successful only if low cost. Choosing the most suitable frequency in terms of noise in the channel, network traffic, etc. may be important not only for energy constrained systems but also for systems requiring low latency, low bit error rate, etc.

The Carrier Sense Multiple Access (CSMA) communication protocol, fast frequency hopping, local estimation of channel quality, etc. have been used to avoid inter network interference problems. These schemes attempt to avoid collision when two or more devices try to use the same channel at the same time.

### SUMMARY OF THE INVENTION

An exemplary embodiment and/or exemplary method of the present invention relates to avoiding, or least minimizing, interference between coexisting wireless networks. In this regard, the exemplary embodiment and/or exemplary method of the present invention may use statistics collection and other techniques to choose a suitable communication channel and/or frequency. In particular, the present invention provides an exemplary embodiment and/or an exemplary coupling method whereby networks may avoid using the same frequency used by other networks (e.g., under heavy usage) or avoid using the same frequency or network identifier (ID) used by similar applications within different networks (e.g., situations where packets could be interpreted by both the systems).

According to an exemplary embodiment and/or exemplary method of the present invention, a centralized scheme may be provided whereby the system may choose the most suitable channel and/or frequency for communication by passively collecting channel properties, such as, for example, ambient noise level, and then selecting one or more channels and/or frequencies based on certain system requirements.

According to another exemplary embodiment and/or exemplary method of the present invention, the scheme may prevent usage of the same frequency or network identifier (network ID) used by an adjacent system with a similar communication scheme.

An exemplary embodiment and/or exemplary method of the present invention is directed to a method for providing interference avoidance in a network, which includes sampling each frequency of a communication channel available to the network, collecting samples at a certain location of the network, choosing at least one of a suitable frequency and a unique network identifier based on the collected samples, and distributing the at least one of the suitable frequency and the network identifier to a device of the network.

Another exemplary embodiment and/or exemplary method of the present invention is directed to a method for providing interference avoidance in a network, in which the samples include at least one of a noise level and a network traffic level.

Yet another exemplary embodiment and/or exemplary method of the present invention is directed to a method for providing interference avoidance in a network, which includes choosing a backup frequency based on the collected samples, and distributing the backup frequency to each device of the network.

Still another exemplary embodiment and/or exemplary method of the present invention is directed to a method for providing interference avoidance in a network, in which each frequency of the communications channel is sampled by each device of the network.

Yet another exemplary embodiment and/or exemplary method of the present invention is directed to a method for providing interference avoidance in a network, in which the samples are collected at a base station of the network.

Yet another exemplary embodiment and/or exemplary method of the present invention is directed to a method for providing interference avoidance in a network, in which each frequency of the communications channel is initially sampled by only least-energy constrained devices of the network.

Still another exemplary embodiment and/or exemplary method of the present invention is directed to a method for providing interference avoidance in a network, which includes one of listening and querying the communications channel for a network identifier of an adjacent network.

Yet another exemplary embodiment and/or exemplary method of the present invention is directed to a method for providing interference avoidance in a network, in which the at least one of the suitable frequency and the network identifier is chosen to be a unique combination.

Still another exemplary embodiment and/or exemplary method of the present invention is directed to a method for providing interference avoidance in a network, in which the combination is distributed to all network devices prior to a completion of an initialization of the network.

An exemplary embodiment and/or exemplary method of the present invention is directed to a system to avoid interference in a network, which includes a plurality of network nodes to sample each frequency of a communication channel available to the network, and a collecting node to collect samples at a certain location of the network, choose at least one of a suitable frequency and a unique network identifier based on the collected samples, and distribute the at least one of the suitable frequency and the network identifier to at least one of the plurality of network nodes.

Another exemplary embodiment and/or exemplary method of the present invention is directed to a system to avoid interference in a network, in which the samples include at least one of a noise level and a network traffic level.

Yet another exemplary embodiment and/or exemplary method of the present invention is directed to a system to avoid interference in a network, in which the collecting node is configured to choose a backup frequency based on the collected samples and distribute the backup frequency to each of the plurality of network nodes.

Still another exemplary embodiment and/or exemplary method of the present invention is directed to a system to avoid interference in a network, in which each frequency of the communications channel is sampled by each of the plurality of network nodes.

Yet another exemplary embodiment and/or exemplary method of the present invention is directed to a system to avoid interference in a network, in which the collecting node includes a base station of the network.

Still another exemplary embodiment and/or exemplary method of the present invention is directed to a system to avoid interference in a network, in which each frequency of the communications channel is initially sampled by only least-energy constrained nodes of the network.

Yet another exemplary embodiment and/or exemplary method of the present invention is directed to a system to avoid interference in a network, in which at least one of the plurality of network nodes is configured to one of listening and querying the communications channel for a network identifier of an adjacent network.

Still another exemplary embodiment and/or exemplary method of the present invention is directed to a system to avoid interference in a network, in which the at least one of the suitable frequency and the network identifier is chosen to be a unique combination.

Yet another exemplary embodiment and/or exemplary method of the present invention is directed to a system to avoid interference in a network, in which the combination is distributed to all network nodes prior to a completion of an initialization of the network.

An exemplary embodiment and/or exemplary method of the present invention is directed to a method for providing interference avoidance in a network, which includes sampling each frequency of a communication channel available to the network, the sampling being initially performed by only least-energy constrained devices of the network, collecting samples at a certain location of the network, the samples including at least one of a noise level and a network traffic level, choosing at least one of a suitable frequency and a unique network identifier based on the collected samples, the at least one suitable frequency and the network identifier being chosen to be a unique combination, distributing the at least one of the suitable frequency and the network identifier to a device of the network prior to a completion of an initialization of the network, choosing a backup frequency based on the collected samples, distributing the backup frequency to each device of the network, each frequency of the communications channel being sampled by each device of the network and collected at a base station of the network, and one of listening and querying the communications channel for a network identifier of an adjacent network.

### BRIEF DESCRIPTION OF THE DRAWINGS

Figure 1A shows an exemplary wireless network, which includes a base station and seven network nodes within the coverage area of the base station.
Figure 1B shows an exemplary communications channel available to the exemplary wireless network of Figure 1A.
Figure 1C shows an exemplary method for choosing the most suitable frequency of the exemplary communications channel of Figure 1B.
Figure 2A shows adjacent overlapping network systems, in which the base station of the exemplary wireless network of Figure 1A is within the radio range of the base station of the adjacent wireless network installation.
Figure 2B the shows adjacent overlapping systems, in which the base station of the exemplary wireless network of Figure 1A receives transmissions from only certain nodes of the adjacent network installation.
Figure 2C shows the adj acent overlapping network systems, in which nodes associated with the base station of the exemplary wireless network of Figure 1A also receive the transmissions of the base station of the adjacent installation.
Figure 2D shows the adjacent overlapping network system, in which certain nodes of the exemplary wireless network of Figure 1A hear certain nodes of the adjacent wireless network installation.
Figure 3 shows an exemplary time line, in which the base station and seven associated nodes of the exemplary wireless network listen to frequencies of a communication channel for X seconds each.
Figure 4A shows two exemplary adjacent networks, in which the base station of the exemplary wireless network of Figure 1A, and some of the network nodes associated with the wireless network of Figure 1A, are "higher energy" nodes (i.e., less energy constrained).
Figure 4B shows an exemplary method for choosing the most suitable frequency of a communications channel for the network of Figure 4A, in which a query is performed by devices with higher energy resources.
Figure 5 shows an exemplary phase approach for choosing a frequency and/or network identifier for network operation.

### DETAILED DESCRIPTION

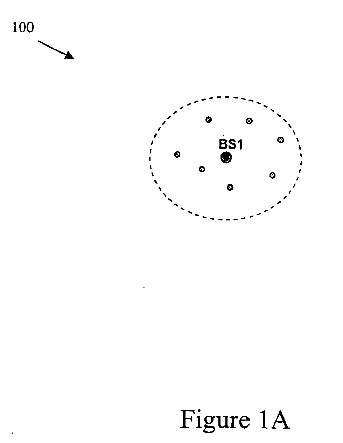

Figure 1A shows an exemplary wireless network 100, which includes a base station BS1 and seven network nodes within the coverage area of the base station BS 1. The base station BS 1 and seven network nodes are referred collectively as the "devices" of the exemplary wireless network 100. In this regard, it is assumed that the devices of the exemplary wireless network 100 are capable of measuring desired channel characteristics, such as, for example, ambient noise level, etc. It is also assumed that there are multiple channels from which the devices may choose, and that a transceiver of each device is capable of communicating on all channels (assuming the channel quality is acceptable). It is further assumed that at least one device (e.g., base station BS1) can collect all the channel characteristics and make a decision regarding the most suitable channel for the system.

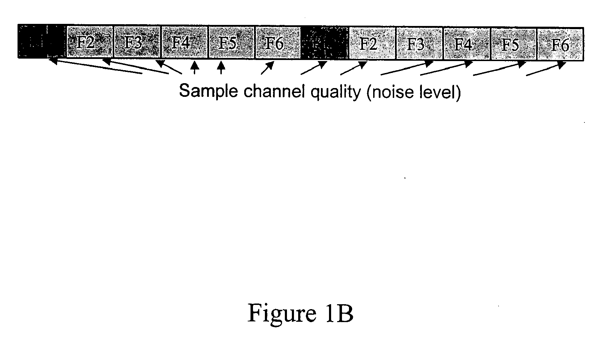

Figure 1B shows an exemplary communications channel available to the exemplary wireless network 100 of Figure 1A. The exemplary communications channel includes six frequencies F1 to F6. To choose a suitable frequency, the base station BS1 may need to know about the channel quality of all available frequencies that are being used by other adjacent networks.

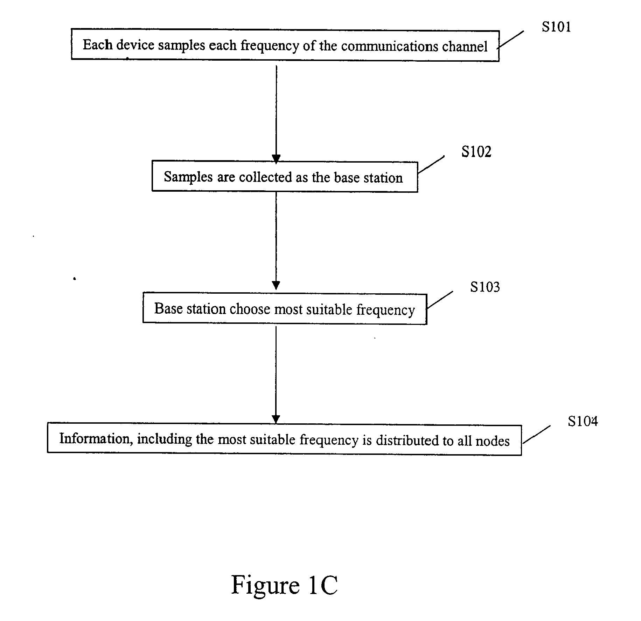

Figure 1C shows an exemplary method for choosing the most suitable frequency of a communications channel, in which all the devices (e.g., the seven network nodes and the base station BS1) sample the channel regarding quality and usage of all available frequencies, and the base station BS1 uses the sampled information to choose a frequency(s) that is most suitable for all the nodes in the network.

In step S101, each device of the exemplary wireless network 100 (i.e., the base station BS 1 and each of seven network nodes) samples all frequencies F1 to F6 of the communication channel to collect the channel parameters for each frequency F1 to F6. In this regard, each device may collect, for example, about 100 samples for each frequency F1 to F6, and the interval between any two sequential samples should be sufficiently long to prevent the system from assuming a channel to be heavily loaded if the samples were taken during a packet transmission of a different network.

In step S102, all of the sampled parameters from each device are collected at the base station BS 1. The sample parameters may include, for example, a noise level or a network traffic level or any other measurable characteristic. The parameters may be collected, for example, at a predefined interval, or alternatively, the parameters may be collected in a continuous manner.

In step S103, the base station BS1 chooses the most suitable frequency(s) depending on a cost function. The cost function may include, for example, costs related to the amount of resources required to communicate on a particular frequency, or a time required to perform communications.

In step S104, information, including the most suitable frequency(s), is distributed to all devices of the exemplary wireless network 100. In this regard, the information may be distributed, for example, all at once or in parts. Moreover, the information or parts thereof may be distributed immediately, or at a predefined interval.

If the network can interpret the packets from an adjacent overlapping network systems, this information may be used to avoid using the same frequency which is used by the adjacent system, and if using the same frequency cannot be avoided (e.g., other frequencies not usable, very few frequencies available, etc.) at least a different network identifier (ID) may be used to distinguish the packets. In this regard, it may be assumed, for example, that the adjacent system transmits a packet at least once every X seconds or will respond to queries from other systems.

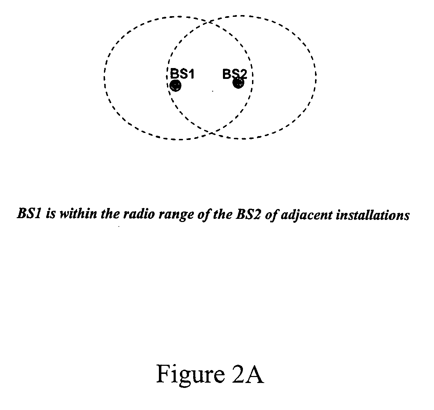

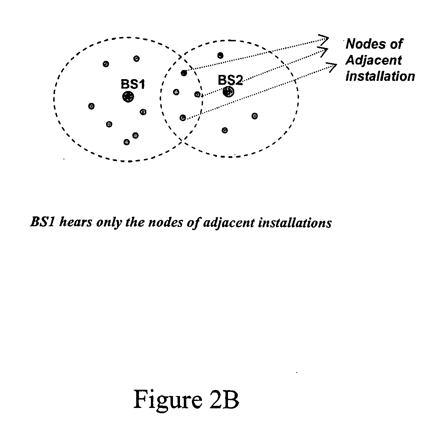

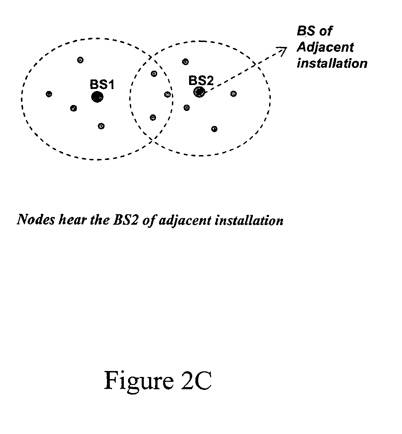

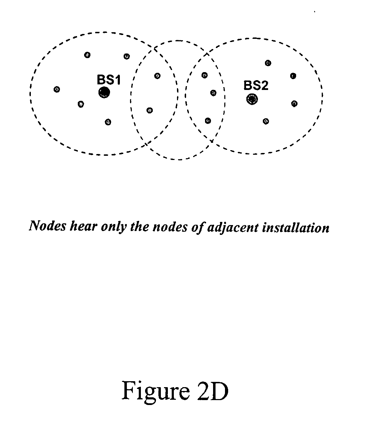

Figures 2A through 2D show four possible scenarios for adjacent overlapping network systems involving the exemplary wireless network of Figure 1A and an adjacent wireless network installation, where BS 1 is the base station of the exemplary wireless network and BS2 is the base station of the adjacent network installation. In particular, Figure 2A shows the adjacent overlapping network systems, in which the base station BS1 of the exemplary wireless network of Figure 1A is within the radio range of the base station BS2 of the adjacent wireless network installation. Figure 2B shows the adjacent overlapping systems, in which the base station BS1 hears only certain nodes of the adjacent network installation. Figure 2C shows the adjacent overlapping network systems, in which nodes associated with the base station BS1 also hear the transmissions of the base station BS2 of the adjacent installation. Finally, Figure 2D shows the adjacent overlapping network system, in which certain nodes of the exemplary wireless network of Figure 1 A hear certain nodes of the adjacent wireless network installation.

### Passive listening for X seconds:

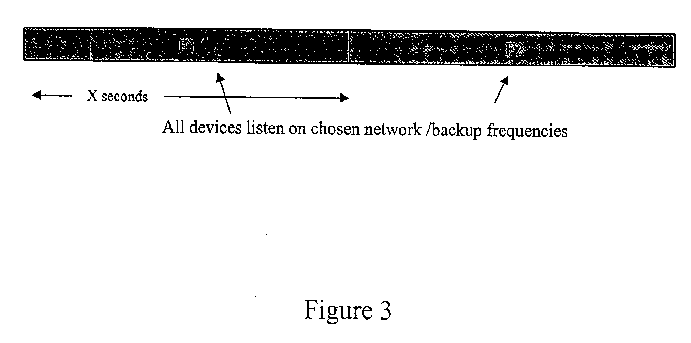

To handle the above-described exemplary scenarios in which the adjacent network transmits a packet at least once every X seconds, the devices of the exemplary wireless network (base station BS1 and the seven network nodes associated with the exemplary wireless network) may listen on previously chosen frequency(s), or on control channels (if any), to hear any packet transmission in the adjacent system. In particular, the devices (base station BS1 and associated seven network nodes) may listen to the frequencies for X seconds each, as with, for example, Figure 3. The adjacent system may transmit time synchronization packets or periodic data at least once every X seconds. Certain systems may use a system identifier (ID) or network identifier (ID) in their packets so that the devices may distinguish packets of their network from other networks. The devices (base station BS1 and associated seven network nodes) may collect all or some of this information and gather it at the base station BS 1, which chooses the most suitable frequency (e.g., not used by an adjacent system) and a network identifier (ID) that is unique based on the information collected.

In certain systems, the base station (BS) and/or nodes closer to the base station (BS) communicate more often than the nodes located further away from the base station (BS). For example, nodes closer to the base station (BS) may be more involved in data forwarding, acknowledgments, time synchronization, etc. The nodes located further away from the base station (BS) may not transmit a packet in intervals smaller than X seconds (as with, for example, the exemplary scenario shown in Figure 2D). If the adjacent systems can be queried, the following exemplary method may not only address this issue but may also be used to collect frequency usage and the network identifier (ID) of any system that communicates at frequencies longer than X seconds.

### Network ID query

If different devices have different energy constraints, then only the devices with greater available energy resources (e.g., the base station (BS) or network nodes with a greater battery capacity, etc.) may query the adjacent systems first, since this process may be expensive if repeated numerous times. Once these less energy-constrained devices choose the most suitable frequency and/or network identifier (ID), the more energy-constrained devices may verify the suitability of the frequency.

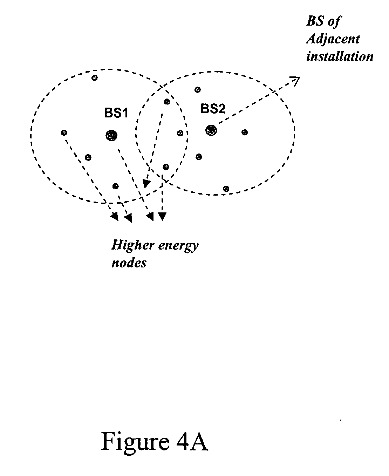

Figure 4A shows two exemplary adjacent networks, in which the base station BS1 of the exemplary wireless network of Figure 1A, and some of the network nodes associated with the wireless network of Figure 1A, are "higher energy" nodes (i.e., less energy constrained).

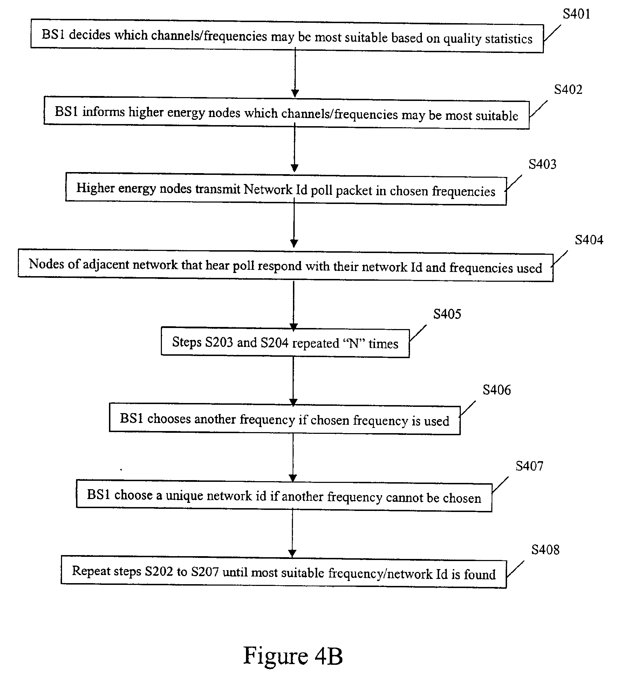

Figure 4B shows an exemplary method for choosing the most suitable frequency of a communications channel for the network of Figure 4A, in which a query is performed by devices with higher energy resources. In this regard, the exemplary method may be implemented, for example, via a suitable processing arrangement.

In step S401, based on previously collected channel quality statistics, the base station BS1 decides which channels and/or frequencies may be most suitable for its network.

In step S402, once the processing arrangement of the base station BS 1 decides which channels/frequencies may be the most suitable, all the higher energy devices are informed. In step S403, the informed higher energy devices transmit a "Network ID poll packet" in the chosen frequency(s). The poll packet may be preceded by a signal which is long enough to wakeup all the nodes in its hearing range who might be listening to the channel with a low duty cycle.

In step S404, base station BS2 and all the nodes of the adjacent installation that can hear the transmitted network Id poll packet respond with their network identifier (ID) and frequencies used, at their convenience or within a fixed period.

In step S405, the network devices repeat the above procedure a predefined number of times "N", spaced apart by a predefined time (e.g., allowing enough time to receive responses), if they do not hear any response. This is performed to ensure that the responses are not lost due to collision or losses in the channel. The transmission of the network id poll packet may open a possible security threat since these packets may not have a mechanism to prevent replay attacks. To reduce the affect of this attack, any node (or BS) responds to only a predefined number of network id poll packets within a predefined time period (e.g., an hour).

In step S406, if the network devices discover that this particular frequency is being used by another installation for network operation, the base station BS 1 may choose another network frequency.

In step S407, if the base station BS1 cannot choose another frequency (e.g., the noise level in some frequencies are not suitable for network operation or other frequencies are overloaded) the same frequency may be assigned to more than one installation. In such an exemplary scenario, a unique network identifier may be required to distinguish packets. It is noted, however, that having more than one installation operating in the same network frequency may not be efficient.

In step S408, if the base station BS 1 chooses a different frequency for network operation, it repeats the steps S402 to S407 until the most suitable frequencies/network ID is found for network operation.

### Verification of stability of chosen frequency (s)

For verification purposes, the chosen frequency(s) and/or network identifier (ID) are distributed to the power-constrained devices, which either listen (if not done so already) for any packet exchange for a predefined time in the chosen frequency or poll the adjacent system based on the requirements of the system. For example, the above-described exemplary method of Figure 4B may be most suitable for overlapping network scenarios shown in Figures 2A and 2B, or shown in Figure 2C if the devices are in the overlapping region. However, to ensure that the selected parameters are unique with respect to the scenarios shown by Figures 2C and 2D, the power-constrained nodes may listen passively in the chosen frequency to receive packets, such as, for example, time synchronization packets, etc. If the adjacent system does not transmit packets within X seconds, the nodes may also query the adjacent systems.

If the network nodes transmit very infrequently and the networks overlap only as shown in Figure 2D, then the frequency need not be unique since the contention might be very low and a unique network identifier (ID) or type of the packet may be used to distinguish packets of adjacent networks.

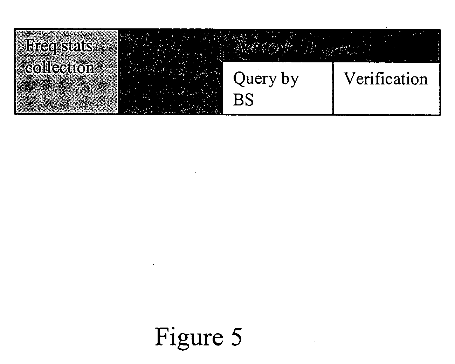

Figure 5 shows an exemplary phase approach for choosing a frequency and/or network identifier for network operation. In the first phase, frequency statistics are collected. In the second phase, passive listening is performed. In the third phase, a network identifier query is performed, which may include a query by the base station and a verification process.

### Mapping of channel number and Network ID

To reduce the data exchanged between adjacent systems and to reduce passive listening/network queries, there may be a mapping of channel number and network identifier (ID) for adjacent systems using the same communication protocol. This mapping may allow identification of frequency usage based on the network identifier (ID) collected. It may be a many to one mapping of network identifiers (IDs) to channel number if more than one network will use the same channel with a unique network identifier (ID).

Certain systems may use more than one frequency for network operation. For example, one frequency may be used as a control signal, one frequency may be used for network traffic, and more than one frequency may be used as a backup frequency(s) (e.g., used when network channel is not usable, etc.) During passive listening or network query in a frequency "F", if the devices hear network identifier (ID) "n" in use, then the system may automatically know that frequency F1 (to which n is mapped) cannot be used for network operation (or the cost of the frequency is changed automatically). For example, if there are seven frequencies that can be used for an application, they may be assigned in the following manner:

A default frequency is used by all networks at startup before choosing the most suitable frequency. Here it is assumed that the default frequency is usable for initial communication but may have high packet losses, etc. Each network also chooses a fixed network frequency and all communications in the network occurs on this frequency. Each network also chooses a fixed backup frequency(s), which are used for retransmissions when the transmission on the network frequency doesn't get through.

A mapping function may be used, which may be, for example, modulus of (network identifier (ID), channels available for network operation). For example, Mod (128,6) = 2. If a device hears network identifier (ID) 128 in use in any frequency, then channel 2 is definitely used by an adjacent installation and should be avoided for network / backup frequency.

## Claims

1. A method for providing interference avoidance in a network, the method comprising:
sampling each frequency of a communication channel available to the network;
collecting samples at a certain location of the network;
choosing at least one of a suitable frequency and a unique network identifier based on the collected samples; and
distributing the at least one of the suitable frequency and the network identifier to a device of the network.

2. The method of claim 1, wherein the samples include a noise level.

3. The method of claim 1, wherein the samples include a network traffic level.

4. The method of claim 1, further comprising:
choosing a backup frequency based on the collected samples; and
distributing the backup frequency to each device of the network.

5. The method of claim 1, wherein each frequency of the communications channel is sampled by each device of the network.

6. The method of claim 1, wherein the samples are collected at a base station of the network.

7. The method of claim 1, wherein each frequency of the communications channel is initially sampled by only least-energy constrained devices of the network.

8. The method of claim 1, further comprising:
one of listening and querying the communications channel for a network identifier of an adjacent network.

9. The method of claim 1, wherein the at least one of the suitable frequency and the network identifier is chosen to be a unique combination.

10. The method of claim 9, wherein the combination is distributed to all network devices prior to a completion of an initialization of the network.

11. A system to avoid interference in a network, comprising:
a plurality of network nodes to sample each frequency of a communication channel available to the network; and
a collecting node to collect samples at a certain location of the network, choose at least one of a suitable frequency and a unique network identifier based on the collected samples, and distribute the at least one of the suitable frequency and the network identifier to at least one of the plurality of network nodes.

12. The system of claim 11, wherein the samples include at least one of a noise level and a network traffic level.

13. The system of claim 11, wherein the collecting node is configured to choose a backup frequency based on the collected samples and distribute the backup frequency to each of the plurality of network nodes.

14. The system of claim 11, wherein each frequency of the communications channel is sampled by each of the plurality of network nodes.

15. The system of claim 11, wherein the collecting node includes a base station of the network.

16. The system of claim 11, wherein each frequency of the communications channel is initially sampled by only least-energy constrained nodes of the network.

17. The system of claim 11, wherein at least one of the plurality of network nodes is configured to one of listening and querying the communications channel for a network identifier of an adj acent network.

18. The system of claim 11, wherein the at least one of the suitable frequency and the network identifier is chosen to be a unique combination.

19. The system of claim 18, wherein the combination is distributed to all network nodes prior to a completion of an initialization of the network.

20. A method for providing interference avoidance in a network, the method comprising:
sampling each frequency of a communication channel available to the network, the sampling being initially performed by only least-energy constrained devices of the network;
collecting samples at a certain location of the network, the samples including at least one of a noise level and a network traffic level;
choosing at least one of a suitable frequency and a unique network identifier based on the collected samples, the at least one suitable frequency and the network identifier being chosen to be a unique combination;
distributing the at least one of the suitable frequency and the network identifier to a device of the network prior to a completion of an initialization of the network;
choosing a backup frequency based on the collected samples;
distributing the backup frequency to each device of the network, each frequency of the communications channel being sampled by each device of the network and collected at a base station of the network; and
one of listening and querying the communications channel for a network identifier of an adjacent network.
